# EUROPÄISCHE PATENTSCHRIFT

(11) **EP 2 501 002 B1**
(45) Veröffentlichungstag und Bekanntmachung des Hinweises auf die Patenterteilung: **26.11.2014**
(21) Anmeldenummer: 11158288.8
(22) Anmeldetag: 15.03.2011
(51) Int. Cl.: H02B 13/045, H02G 5/00

(54) **Querdemontagemodul für eine Schaltanlage**
Diagonal demounting module for a switchgear
Module de montage transversal pour une installation de commutation

(43) Veröffentlichungstag der Anmeldung: 19.09.2012
(73) Patentinhaber: ABB Technology AG, 8050 Zürich (CH)
(72) Erfinder: Sabani, Arben, CH-8172, Niederglatt (CH); Sologuren-Sanchez, Diego, CH-5430, Wettingen (CH); Meier, Patrick, 4663 Aarburg (CH); Erford, Tobias, 8050, Zürich (CH)
(74) Vertreter: ABB Patent Attorneys

(56) Entgegenhaltungen:
- JP-A- 11 069 580
- US-A1- 2011 000 922

## Beschreibung

### TECHNISCHES GEBIET

Ausführungsformen der vorliegenden Erfindung betreffen eine gasisolierte Schaltanlage, insbesondere zur Übertragung von Primärleistungen im Hochspannungsbereich.

Im Speziellen betreffen sie ein Querdemontagemodul für eine derartige Schaltanlage.

### TECHNOLOGISCHER HINTERGRUND UND STAND DER TECHNIK

Gasisolierte Schaltanlagen (GIS) umfassen typischerweise mehrere Schalter, welche über sogenannte Sammelschienen zur Übertragung einer elektrischen Primärleistung miteinander elektrisch verbunden sind. Aus dem Stand der Technik sind sowohl einphasig gekapselte, wie auch mehrphasig gekapselte Sammelschienen bekannt. Bei einer einphasigen Sammelschiene sind die Primärleiter mittels eines Isolationsgases in einer jeweils eigenen Kapselung in Form eines metallgekapselten Gehäuses angeordnet. Im Unterschied zur einphasig gekapselten Sammelschiene sind bei der mehrphasig - beispielsweise dreiphasig - gekapselten Sammelschiene die Primärleiter verschiedener, beispielsweise dreier, elektrischer Phasen gemeinsam in einem einzigen metallgekapselten Gehäuse angeordnet.

Je nach Ausführungsform der GIS, beispielsweise in Form einer Hochspannungsanlage, sind die Schalter in verschiedenen Schaltfeldern angeordnet. Mehrere Schaltfelder sind über ein- oder mehrphasig gekapselte Sammelschienen miteinander verbunden. Zugunsten der Kompaktheit der GIS erstreckt sich die Sammelschiene meist quer zu den Schaltfeldern. Bei einem verbreiteten Anlagenkonzept der GIS umfasst jedes Schaltfeld einen sich in axialer Richtung erstreckenden Längsabschnitt der Sammelschiene oder der Sammelschienen, wobei die axiale Richtung von der zylinderförmigen Sammelschiene definiert wird. Derartige Sammelschienenabschnitte werden mitunter auch als Sammelschienenmodule bezeichnet. Nachfolgend wird die Bezeichnung Sammelschienenmodule in diesem Sinn verwendet. Die Kapselung der Sammelschienenmodule weist dabei mindestens eine quer zur axialen Richtung verlaufende Abzweigung pro Schaltfeld auf, durch welche pro Phase ein Verbindungsleiter zum jeweiligen Leistungsschalter führt.

Die Sammelschienenmodule sind dabei über die Schaltfelder fest mit einem Fundament verbunden. Anders formuliert, sind die Schaltfelder mit ihren Sammelschienenmodulen in einem festen Abstand zueinander angeordnet. Zwischen den Sammelschienenmodulen einer Sammelschiene ist je nach Ausführungsform je eine Kompensationseinheit angeordnet, die eine thermische Ausdehnung von einzelnen Modulen der Sammelschiene relativ zueinander ausgleicht. Um die thermische Ausdehnung von einzelnen Modulen relativ zueinander zu ermöglichen, ist die Kapselung der Sammelschiene im Bereich der Kompensationseinheiten lokal, aber dennoch gasdicht unterbrochen. Oftmals wird dies durch zwei ineinander schiebbare Rohrabschnitte erreicht, welche an einem ihrer Enden zur mechanischen Befestigung der benachbarten Kompensationseinheiten je einen Flanschabschnitt aufweisen, so dass ein in axialer Richtung beweglicher Kapselungsabschnitt entsteht. Die Kompensationseinheiten weisen also eine variable Länge in axialer Richtung auf. Weiter steht das Isolationsgas in den Kompensationseinheiten und in den Sammelschienenmodulen unter einem vorbestimmten Gasdruck. Bei einer Erwärmung der aus Sammelschienenmodulen und Kompensationseinheiten aufgebauten Sammelschiene dehnen sich die Kapselungsabschnitte der Sammelschienenmodule in axialer Richtung aus. Diese thermische Ausdehnung führt bei zwei benachbarten, starr mechanisch miteinander verbundenen Sammelschienenmodulen/Modulen zu Kräften, welche in axialer Richtung eine entgegengesetzte Richtungskomponente haben. In der Folge stoßen sich die beiden Sammelschienenmodule/Module gegenseitig ab, wenn die sie an ihren einander zugewandten Enden fest miteinander verbunden sind. Dies kann zu starken Verspannungen führen und eine Verankerung der Schaltfelder im Fundament belasten. Um den genannten resultierenden Kräften der thermischen Ausdehnung zu begegnen, sind aus dem Stand der Technik mehrere Kompensationsmethoden bekannt.

Bei einer Methode werden zur Aufnahme der entstehenden resultierenden Kräfte aufgrund der thermischen Ausdehnung der Kapselung Zuganker eingesetzt. Ein Vertreter dieser Methode ist beispielsweise die EP0093687A1. Aus der EP0093687A1 ist eine druckgasisolierte Hochspannungsschaltanlage mit einem Sammelschienensystem und Schaltfeldern bekannt, bei dem Abzweige der Sammelschiene beziehungsweise deren Kapselung/Gehäuse bezüglich einem Fundament der GIS ortsfest verankert sind. Dabei wird die Sammelschiene auf zwei parallele Achsen aufgeteilt, um die Gesamtausdehnung der Sammelschiene und die dadurch entstehenden Kräfte aufzubrechen. Um zusätzlich eine Kräfteentkopplung von durch den Gasdruck verursachten Kräften der thermischen Ausdehnung der Sammelschiene zu erzielen, ist jeder Abzweig über einen Kompensationsbalg mit den Anschluss- und Sammelschienenmodulen verbunden, so dass die Sammelschiene bezüglich dem ortsfesten Abzweig quasi schwimmend ist.

Die US 2011 0 000 922 offenbart eine derartige Hochspannungssehaltanlage.

Die DE19815151C1 schlägt Ausgleichselemente vor, bei denen längenvariable Kapselungsabschnitte mit Zugankern vorgesehen sind.

Die bekannten Lösungen weisen, wenn sie bei einphasig gekapselten Schaltanlagen eingesetzt werden, jeweils baulich komplett getrennte Ausgleichseinheiten je Nominalleiter auf, die entsprechend getrennte Gasräume haben.

Dies birgt jedoch mehrere Nachteile. Zum einen ist bei einer Demontage des gesamten Abschnitts, das heißt der drei Längenausgleichselemente, eine getrennte Handhabung der Gasevakuierung für jeden Nominalleiter-Zweig erforderlich. Zudem müssen die Abschnitte für die einzelnen Nominalleiter jeweils nacheinander demontiert und entfernt werden, was einen erheblichen Zeit- und Wartungsaufwand erfordert.

### ZUSAMMENFASSUNG DER ERFINDUNG

Es ist daher Aufgabe der vorliegenden Erfindung, ein Querdemontagemodul für eine Schaltanlage bereit zu stellen, das einen Längenausgleich bzw. Kompensation bietet und gleichzeitig ein einfaches Gashandling erlaubt.

Diese Aufgabe wird von dem Querdemontagemodul gemäß Anspruch 1 gelöst.

Gemäß einem ersten Aspekt wird ein Querdemontagemodul für eine Hochspannungsschaltanlage bereitgestellt.

Unter Hochspannung versteht man in dieser Beschreibung eine Betriebs- bzw. Nominalspannung nach DIN VDE von mindestens 1000 Volt (1 kV), wobei die vorliegende Erfindung vor allem für Nominalspannungen von mindestens 100kV besonders vorteilhaft ist.

Das Modul umfasst ein Gehäuse, das drei Kapselungsabschnitte mit jeweils einem starren ersten Teil und einem starren zweiten Teil umfasst, die in Nominalleiterrichtung relativ zueinander bewegbar miteinander verbunden sind, wobei jeder Kapselungsabschnitt zur Aufnahme eines Nominalleiterelements ausgelegt ist. Das Gehäuse umfasst ferner drei längenveränderbare Nominalleiterelemente, wobei pro Phase jeweils ein Nominalleiterelement in einem Kapselungsabschnitt angeordnet ist, und wobei die drei Kapselungsabschnitte über Verbindungselemente miteinander zu einem gemeinsamen Gasraum verbunden sind. Die drei längenveränderbaren Nominalleiterelemente sind endseitig an entsprechend ausgebildete Anschlusselemente zur Übertragung einer elektrischen Leistung, etwa in Form von Kontaktträgern oder Anschlussflanschen gekoppelt. Je nach Bedarf erfolgt diese Koppelung über eine mechanische Befestigung in Form einer Schraubverbindung oder einer Steckverbindung. Die Verbindungselemente erlauben es, den apparativen Aufwand für das Gashandling sowie den Arbeits- bzw. Zeitaufwand für Montage und Demontage des Moduls zu reduzieren. Eine weitere Aufgabe der vorliegenden Erfindung liegt darin, ein Verfahren zur Demontage eines Querdemontagemoduls aus einer Hochspannungsschaltanlage vorzulegen.

Diese Aufgabe wird von dem Querdemontagemodul gemäß Anspruch 14 gelöst. Dazu weist das Verfahren zur Demontage des Querdemontagemoduls aus einer Hochspannungsschaltanlage folgende Schritte auf:
- Evakuieren eines Isoliergases aus dem gemeinsamen Gasraum (180) des Gehäuses (110)
- Lösen von mindestens einer der endseitigen, mechanischen Verbindungen der jeweils drei Kapselungsabschnitte (120), wobei die drei Kapselungsabschnitte (120) über Verbindungselemente (160) miteinander zu einem gemeinsamen Gasraum (180) verbunden sind. Lösen von mindestens einer der endseitigen, elektrischen Verbindungen der jeweils drei Nominalleiter (150)
- Zusammenschieben des jeweils ersten und zweiten Teils (130, 140) der drei Kapselungselemente (120), sowie der Nominalleiterelemente (150), so dass eine Lücke zu einem benachbarten Schaltanlagenabschnitt entsteht, an welchem der Querdemontagemodul im Betrieb der Schaltanlage endseitig befestigt und elektrisch kontaktiert war.
- Entfernen des Querdemontagemoduls (100). Je nach Ausführungsform des Querdemontagemoduls ist dieser allein aus der Schaltanlage demontierbar, oder zusammen mit einem benachbarten Schaltanlagenabschnitt (etwa einem Schaltanlagenmodul), an welchem der Querdemontagemodul einseitig befestigt bleibt, so der Querdemontagemodul (100) zusammen mit diesem Schaltanlagenabschnitt aus der Schaltanlage demontierbar ist.

Weitere Vorteile, Merkmale, Aspekte und Details der Erfindung sowie bevorzugte Ausführungen und besondere Aspekte der Erfindung ergeben sich aus den Ansprüchen, der Beschreibung und den Figuren.

### KURZE BESCHREIBUNG DER ZEICHNUNG

Im Weiteren soll die Erfindung anhand von in Figuren dargestellten Ausführungsbeispielen erläutert werden, aus denen sich weitere Vorteilteile und Abwandlungen ergeben. Dabei zeigen rein schematisch:
- Fig. 1: eine schematische Seitenansicht einer Ausführungsform eines Querdemontagemoduls für eine gasisolierte Schaltanlage;
- Fig. 2: eine schematische perspektivische Ansicht eines Gehäuseteils einer weiteren Ausführungsform eines Querdemontagemoduls;
- Fig. 3: eine schematische Querschnittsansicht des Quermontagemoduls der Fig. 1;
- Fig. 4: eine Teil-Querschnittsansicht einer gasisolierten Schaltanlage gemäß Ausführungsbeispielen; und
- Fig. 5: eine schematische Teilquerschnittsansicht eines Querdemontagemoduls gemäß einer weiteren Ausführungsform.

### WEGE ZUR AUSFÜHRUNG DER ERFINDUNG

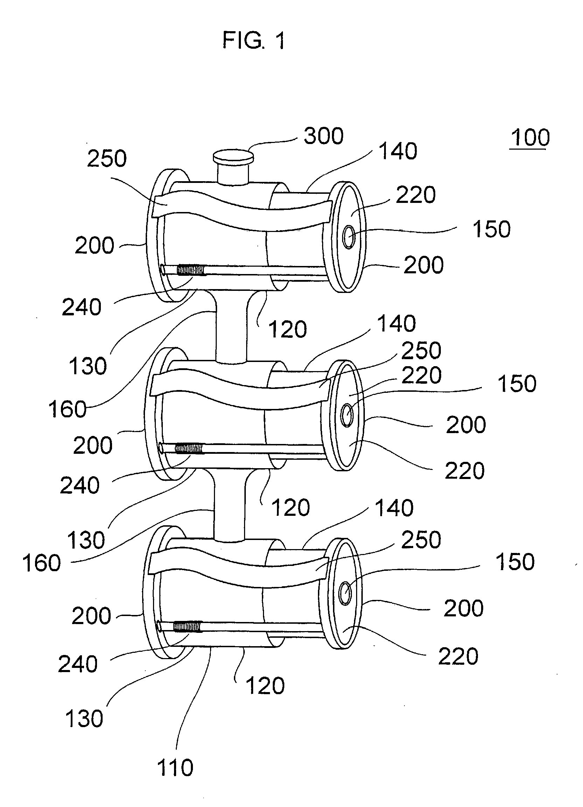

Fig. 1 zeigt eine Ausführungsform eines Querdemontagemoduls 100 für eine Hochspannungsschaltanlage. Das Modul umfasst ein Gehäuse 110 mit drei Kapselungsabschnitten 120, die jeweils zur Aufnahme eines Nominalleiterelements 150 ausgelegt sind. In den Kapselungsabschnitten ist jeweils ein Nominalleiterelement 150 angeordnet. Die Kapselungsabschnitte weisen jeweils einen starren ersten Teil 130 und einen starren zweiten Teil 140 auf, die in Nominalleiterrichtung relativ zueinander bewegbar miteinander verbunden sind, wobei die Verbindungsstellen gasdicht ausgeführt sind. Beispielsweise können zur gasdichten Abdichtung an den Verbindungsstellen O-Ringe angeordnet sein. Die drei Kapselungsabschnitte 120 sind über Verbindungselemente 160, die als Gaskanäle dienen, miteinander zu einem gemeinsamen Gasraum 180 verbunden. In Fig. 1 ist der mittlere Kapselungsabschnitt mit den beiden außen liegenden Kapselungsabschnitten über jeweils ein Verbindungselement 160 verbunden, es sind jedoch auch andere Konstellationen denkbar.

Der gemeinsame Gasraum 180 erlaubt die Reduzierung von Komponenten für das Gashandling, die bei getrennten Gasräumen jeweils dreifach vorhanden sein müssten. Dies betrifft etwa Ventile für das Gashandling, Messvorrichtungen sowie Überdruckventile bzw. Berstscheiben. Durch den gemeinsamen Gasraum 180 ist es in der Regel ausreichend, dass die genannten Elemente nur einmal für den gesamten Gasraum, also beispielsweise nur an einem der Kapselungsabschnitte 120, bereitgestellt sind. Die Dimensionierung der Innenquerschnitte der Verbindungselemente 160 kann primär daran ausgerichtet werden, dass im Fehlerfall eines plötzlichen Überdrucks der erhöhte Gasdruck ausreichend schnell gegebenenfalls durch diese in einen der anderen Kapselungsabschnitte 120 überströmen kann, in dem ein Überdruckventil angeordnet ist. Auf diese Weise können die Kapselung schädigende Druckspitzen vermieden werden. Entsprechende Verfahren zur Auslegungsberechnung sind dem Fachmann bekannt.

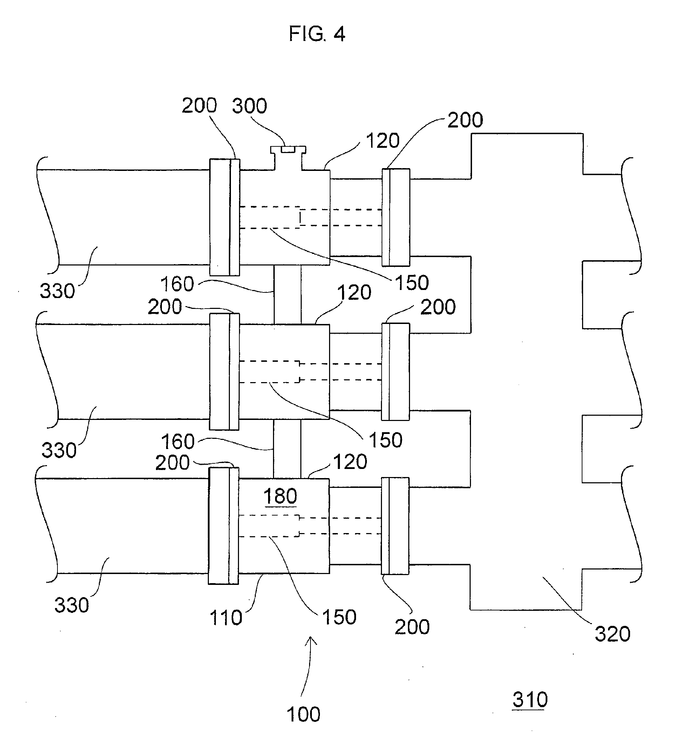

In Ausführungsbeispielen weisen die starren Teile 130, 140 des Gehäuses 110 an ihren voneinander abgewandten Enden Anschlussflansche 200 auf, mit denen das Querdemontagemodul 100 jeweils an benachbarten, weiteren Sammelschienenelementen oder Schaltmodulen einer Schaltanlage 310 befestigt ist (siehe Fig. 4). Durch die gegeneinander beweglichen Teile 130, 140 wird erreicht, dass je Nominalleiterelement ein in axialer Richtung beweglicher bzw. längenveränderbarer Kapselungsabschnitt besteht. Das Querdemontagemodul 100 weist also eine variable Länge in axialer Richtung der Nominalleiterelemente auf und dient auf diese Weise dazu, eine vor allem durch thermische Ausdehnung der Kapselung benachbarter Anlagenteile erzeugte Längenänderung auszugleichen.

In weiteren Ausführungsformen sind entweder jeweils die Teile 130, die Teile 140 oder beide Teile 130, 140 jeweils struktureller Teil eines benachbarten Moduls 320, 330 der Schaltanlage, das heißt sie sind integral mit dessen Kapselung des Gasraums verbunden. Auf diese Weise lässt sich ein Modul einer Schaltanlage, etwa ein Schaltfeld-Modul, bereits zum Anbau eines Querdemontagemoduls vorbereiten bzw. fertigen.

Die Kapselung, im Speziellen die Teile 130, 140 bzw. das Gehäuse 110, 115 kann aus Aluminium, einer Aluminiumlegierung oder einem Kompositwerkstoff gebildet sein. Die Teile 130, 140 bzw. das Gehäuse 110 bzw. Gehäuseteil 115 können beispielsweise durch ein Metallgussverfahren gebildet sein.

Die beiden starren Teile 130, 140 können dabei auf verschiedene Arten miteinander verbunden sein. In Ausführungsformen sind sie, wie in Fig. 1 gezeigt, teleskopartig miteinander verbunden und somit ineinander schiebbar, das heißt einer der Teile ist teilweise in den anderen schiebbar. Hierzu sind die Teile 130, 140 teilweise überlappend bzw. konzentrisch zu einer gemeinsamen Achse angeordnet, die typischerweise auch die Längsachse des betreffenden Nominalleiters 150 ist. In anderen Ausführungsbeispielen sind die Teile 130, 140 etwa mittels eines aus dem Stand der Technik bekannten flexiblen Stahlbalgs miteinander verbunden, der eine Längenänderung erlaubt, oder mittels anderer aus dem Stand der Technik bekannter Varianten wie einem Wellenabschnitt. Die teleskopartige Verbindung gewährleistet einen hohe mechanische Stabilität und damit auch einen hohen Berstdruck im Fehlerfall der Anlage.

Die beiden starren Teile 130, 140 können auch, wie in Fig. 1 dargestellt, durch ein Federelement 240 bzw. einen oder mehrere Zuganker miteinander verbunden sein. Ein solches Federelement 240 ist mit Bezug auf Fig. 4 weiter unten im Detail beschrieben.

In einer Ausführungsform sind die Teile 130, 140 elektrisch leitend miteinander verbunden, insbesondere über Leiterelemente bzw. Kabelstücke 250 elektrisch miteinander verbunden, um einen Ausgleichs-Stromfluss zwischen den Teilen 130, 140 und somit zwischen den an das Quermontagemodule angeschlossenen Modulen der Schaltanlage zu ermöglichen. Dies ist insbesondere bei teleskopartiger Verbindung der Teile 130, 140 zweckmäßig, wenn diese zwischen den gegenseitig überlappenden Abschnitten mit O-Ringen (nicht dargestellt) aus einem Isolator gasdicht gedichtet sind, so dass an dieser Stelle keine elektrische Verbindung zwischen den Teilen besteht.

In einer Ausführungsform sind die zwei Verbindungselemente 160 als starre hohle Elemente ausgeführt, die starr mit den Teilen 130, 140 der Kapselungsabschnitte 120 verbunden sind. Auf diese Weise bilden, wie in Fig. 1 dargestellt, die drei weiblichen Teile 130 mit den beiden Verbindungselementen 160 ein gemeinsames starres Gehäuseteil 115 des Gehäuses 110. Dabei können die verschiedenen Teile in einer Ausführungsform durch mechanische Mittel miteinander verbunden sein, etwa durch Flansche (nicht dargestellt). In einer anderen Ausführungsform können auch die drei männlichen Teile 140 über die Verbindungselemente 160 verbunden sein, was hier nicht dargestellt ist. Beide Varianten können auch kombiniert werden, wobei sowohl die drei Teile 130 ein gemeinsames Gehäuseteil 115 bilden, als auch die Teile 140.

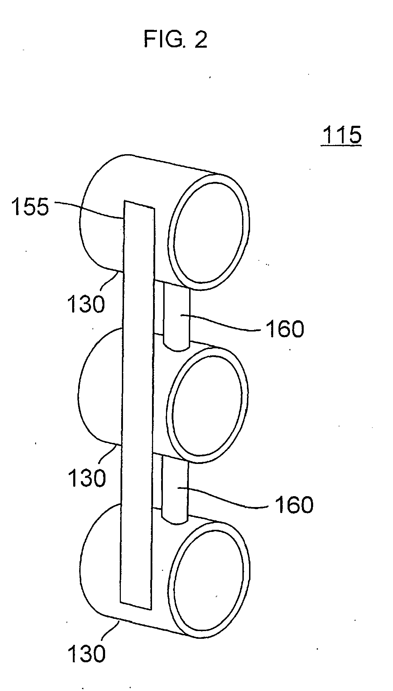

In einer weiteren Ausführungsform sind die Teile 130 und die Verbindungselemente 160 zusammen einstückig ausgeführt, das heißt als gemeinsam gefertigtes Gehäuseteil 115, das beispielhaft in **Fig. 2** dargestellt ist. Die Teile 130, 160, 115 sind beispielsweise aus Aluminium oder einer Aluminiumlegierung gefertigt. Als Fertigungsmethode kann zum Beispiel ein Gussverfahren zum Einsatz kommen. Dabei können starr miteinander verbundene Teile aus einem Guss gefertigt sein, oder aus mehreren Gussteilen gefertigt und z.B. über Flanschverbindungen starr miteinander verbunden sein. Durch das einstückige starre Gehäuseteil 115 kann das gesamte Querdemontagemodul 100 bei der Montage oder Demontage mittels einer Hebevorrichtung als Ganzes bewegt werden, wobei etwa ein Aufhängepunkt an einem der Teile 130 vorgesehen sein kann (nicht dargestellt). Die Verbindungselemente 160 sind in diesem Fall erheblichen Kräften bzw. Momenten ausgesetzt, was bei der Auslegung der Wandstärken und der Durchmesser bzw. Querschnitte der Elemente 160 berücksichtigt werden sollte. Entsprechende Auslegungsverfahren sind dem Fachmann bekannt.

Die Stabilität des Gehäuseteils 115 für Montagezwecke kann in Ausführungsformen noch dadurch erhöht bzw. die Verbindungselemente 160 entlastet werden, indem zusätzlich mindestens ein längliches Versteifungsprofil 155 aus Metall oder einem Kompositwerkstoff vorgesehen ist, das oder die etwa an den Außenseiten aller drei Teile 130 befestigt ist/sind. Dies ist schematisch ebenfalls in Fig. 2 dargestellt. Diese Maßnahme erhöht die Gesamtsteifigkeit des Gehäuseteils 115, wodurch im Gegenzug etwa eine schwächere Auslegung der Wandstärken der Verbindungselemente 160 möglich ist. Die Verbindungselemente und gegebenenfalls die Versteifungsprofile sind in Ausführungsformen mechanisch derart stabil mit den ersten drei Teilen 130 verbunden, dass der Querdemontagemodul 100 an einem der drei Teile 130 anhebbar ist.

Wie in Fig. 1 und 2 gezeigt, sind die Längsachsen der drei Kapselungsabschnitte 120 parallel und typischerweise in einer gemeinsamen Ebene angeordnet. Typischerweise sind die Längsachsen in gleichen Abständen voneinander entfernt angeordnet, mit anderen Worten in regelmäßigem Abstand aufgereiht. In anderen Ausführungsformen können die drei Achsen anders angeordnet sein. Typischerweise gibt es mindestens einen Bereich des Kapselungsabschnitts 120, in dem die Kapselung das jeweilige Nominalleiterelement 150, im Querschnitt durch den Nominalleiter betrachtet, vollständig in einem Raumwinkel von 360° umschließt.

Wie in Fig. 1 dargestellt, können die Kapselungsabschnitte 120 bzw. die Teile 130, 140 in Ausführungsformen endseitig mit Flanschen 200 versehen sein. Diese dienen zur Montage des Querdemontagemoduls 100 an angrenzende Module bzw. Sammelschienen der Schaltanlage. Die Flansche 200 können dabei zur Montage von Schottisolatoren 220 oder Stützisolatoren (nicht dargestellt) ausgelegt sein.

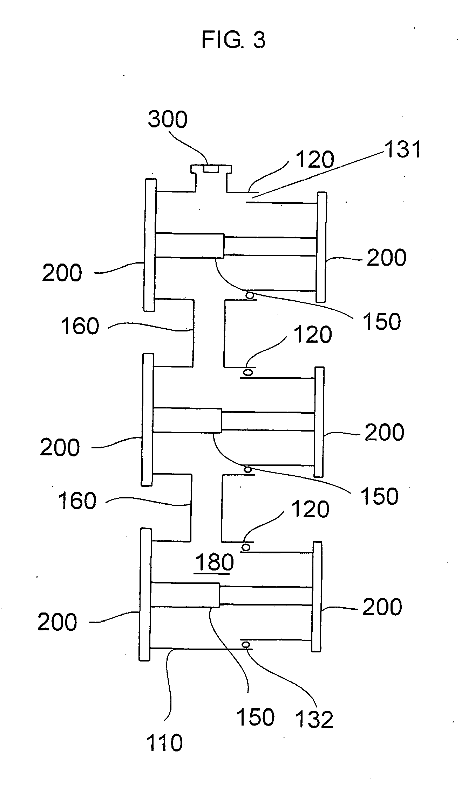

**Fig. 3** zeigt eine schematische Querschnittsansicht des Moduls der Fig. 1. Dabei sind die Nominalleiter 150 mit zwei verschiedenen Abschnitten ausgeführt, die zur Längenänderung teleskopartig ineinander schiebbar sind. Die drei in Ansicht dargestellten, längenveränderbaren Nominalleiterelemente 150 sind endseitig, das heißt im Bereich der Flansche 200 an entsprechend ausgebildeten, in Fig. 3 nicht dargestellten Anschlusselementen zur Übertragung einer elektrischen Leistung, etwa in Form von Kontaktträgern oder Anschlussflanschen befestigbar und elektrisch kontaktierbar. Diese Koppelung erfolgt hier pro Phase über eine nicht näher beschriebene Schraubverbindung zu einem am benachbarten Schaltanlagenabschnitt befestigten Kontaktträger. In der Fig. 3 sind zugunsten der Klarheit der Gehäusequerschnitt nur als Linie dargestellt, während die Flansche 200 in der Seitenansicht gezeigt sind. In der Fig. 3 sind zugunsten der Klarheit auch die drei Kapselungsabschnitte 120 mit jeweils einem starren ersten Teil 130 (links) und einem starren, teleskopartig in den ersten Teil 130 hineingeschobenen zweiten Teil 140 der Gehäusequerschnitt nur mit Linien fiktiv dargestellt. Eine ringförmige Lücke 131 zwischen den drei Abschnitten des ersten Teils 130 und des zweiten Teils 140 ist mittels einem Dichtungselement 132 gasdicht verschlossen.

In Ausführungsformen umfasst das Gehäuse mindestens ein Element 300 zum Wechselwirken mit einem Schutzgas. Dieses kann ein Überdruckventil sein, das typischerweise in Form einer Berstscheibe ausgeführt ist. Bei einer Fehlfunktion der Anlage, insbesondere der Entwicklung eines Lichtbogens im Gasraum 180, kann ein entstehender Überdruck durch die Berstscheibe entweichen, wodurch die Schaltanlage vor Schäden durch den auftretenden Überdruck geschützt ist. Ferner kann das Element 300 als Gashandlings-Ventil ausgeführt sein, das heißt zum Ein- und Auslass des Isoliergases im Gasraum 180. Weiter kann das Element 300 eine Vorrichtung zur Gasdruckerfassung, zur Temperaturerfassung und/oder zur Teilentladungserfassung sein. Diese Elemente müssen wegen des gemeinsamen Gasraums 180 der drei Kapselungsabschnitte jeweils nur einfach vorgesehen sein, was eine erhebliche Fertigungsersparnis bringt und gleichzeitig die Anzahl fehleranfälliger Teile an dem Modul reduziert, wodurch die Zuverlässigkeit gesteigert wird. Zudem kann so die Gas-Leckrate der Schaltanlage 310 reduziert werden.

**Fig. 4** zeigt eine gasgekapselte Hochspannungsschaltanlage 310, die ein Querdemontagemodul 100 gemäß einer beliebigen Ausführungsform umfasst. In der Fig. 4 sind die Nominalleiter 150 nur gestrichelt dargestellt. Der gemeinsame Gasraum 180 des Gehäuses 110 ist im Betrieb mit einem elektrisch isolierenden Gas gefüllt, typischerweise Schwefelhexafluorid unter einem Druck von größer 2,5 bar, noch typischer größer 4 bar. Sind die an den Flanschen 200 vorgesehenen Isolatoren als Stütz-, und nicht als Schottisolatoren ausgeführt, kann der Gasraum 180 des Querdemontagemoduls wiederum einem gemeinsamen Gasraum mit den Gasräumen der angeschlossenen Schaltanlagenmodule oder Sammelschienenmodule 320, 330 bilden.

Die Kapselungsabschnitte 120 des Gehäuses 100 sind dabei über die Flansche 200 stirnseitig mit benachbarten Modulen 320, 330 der Schaltanlage verbunden, wobei jeweils der erste Teil 130 und der zweite Teil 140 eines Kapselungsabschnitts 120 über ein Federelement 240 gegeneinander verspannt sind. Die längenveränderbaren Federelemente sind so ausgeführt, dass sie auf die beiden Teile 130, 140 eine zusammenziehende, das heißt auf eine Verkürzung des Kapselungsabschnitts 120 hinwirkende Kraft ausüben. Dadurch kann der durch den Gasdruck in Gasraum 180 auf die Schottisolatoren 220 wirkende Kraft, die die Teile 130, 140 auseinanderdrückt, zumindest teilweise kompensiert werden.

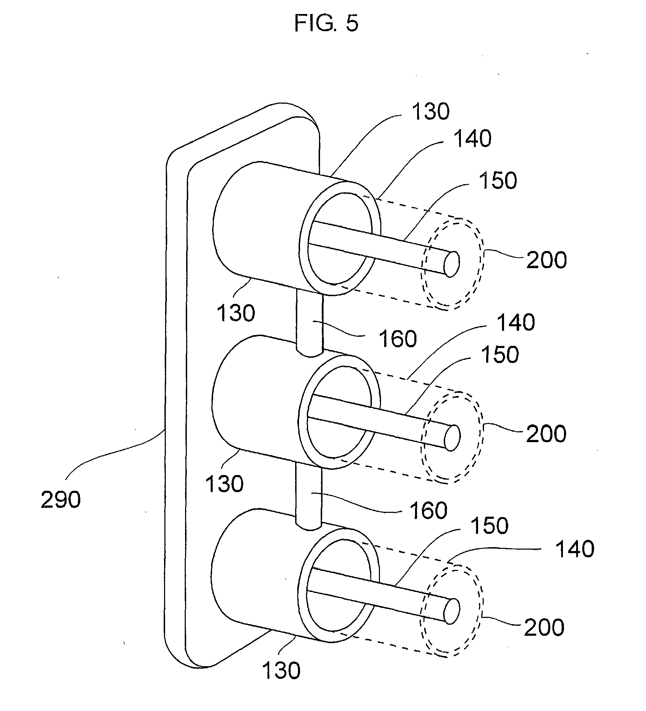

**Fig. 5** zeigt eine schematische Darstellung eines Quermontagemoduls 100 ähnlich dem der Fig. 1. In der Fig. 5 sind zugunsten der Klarheit die Kapselungsabschnitte 120 mit den starren zweiten Teilen 140 gestrichelt dargestellt, um die Verständlichkeit der Figur nicht unnötig zu beeinträchtigen. In diesem Ausführungsbeispiel sind die drei Teile 130 endseitig über einen gemeinsamen Flansch 290 miteinander verbunden. Ähnlich zu den bereits diskutierten Ausführungsbeispielen, bei denen die Teile 130 und die Verbindungselemente 160 einstückig ausgeführt sind, trägt hier der gemeinsame verbindende Flansch 290 zu einer Erhöhung der Stabilität des Gehäuses bei. Dies kann in Ausführungsbeispielen auch mit der bereits erwähnten einstückigen Gestaltung des Gehäuseteils 115 kombiniert werden. In Fig. 5 sind aus illustratorischen Gründen nicht alle in der Fig. 1 gezeigten Komponenten des Moduls 100 gezeigt. Ansonsten ist die Beschreibung der Fig. 1 auch auf Fig. 5 anwendbar. Diese Ausführungsform ist vorteilhaft in Bezug auf die mechanische Bearbeitung der Flanschkontaktflächen, die in Fig. 5 auf der Rückseite des Flanschs 290 liegen und somit nicht sichtbar sind. Somit ist eine höhere Präzision bei der Flanschfertigung möglich, zusätzlich zu dem Effekt der Stabilitätserhöhung. Der gemeinsame Flansch 290 kann für die Einsetzung von Scheibenisolatoren vorgesehen sein.

Bei der Demontage eines Querdemontagemoduls 100 gemäß Ausführungsformen, das in einer Schaltanlage 310 verbaut ist, wird zunächst das Isoliergas aus dem gemeinsamen Gasraum 180 des Gehäuses 110 evakuiert. Dies kann etwa durch das als Gashandlings-Ventil ausgeführte Element 300 durchgeführt werden. Anschließend werden die Verbindungen der Flansche 200 auf der rechten Seite zum benachbarten Modul 320 der Schaltanlage gelöst. Danach werden die starren zweiten Teile 140 einer nach dem anderen in Richtung des noch befestigten Flansches 200 auf der linken Seite teleskopartig in den starren ersten Teil 130 der drei Kapselungsabschnitte 120 hineingeschoben, so dass so dass eine Lücke zwischen dem Flansch 200 des starren zweiten Teils 140 und dem jeweiligen Gegenflansch des Flansch benachbarten Schaltanlagenabschnitts 320 entsteht. Die Lücken werden als Bewegungsspielraum während der Demontage aus der Schaltanlage 310 benötigt.

Durch Zusammenschieben des jeweils ersten und zweiten Teils 130, 140 der drei Kapselungselemente 120 wird eine Verkürzung der Gesamtlänge des Moduls 100 bzw. von dessen Gehäuse 110 erreicht. Je nach Ausführungsform des Nominalleiters 150 ist dieser nach dem endseitigen Lösen am Kontaktträger des Gegenkontaktes des benachbarten Schaltanlagenabschnitts 320 lösbar und teleskopartig längenverkürzbar, oder der Nominalleiter 150 wird endseitig von beiden Gegenkontakten des benachbarten Schaltanlagenabschnitts 320, 330 gelöst. Wenn die Lücke groß genug ist, kann der Nominalleiter 150 durch sie hindurch ausgebaut werden. Wenn die Lücke dafür zu gering ist, kann der Leiter 150 endseitig gelöst und teleskopartig zusammengefahren im Kapselungsabschnitt 120 belassen werden. In Letzterem Fall ist der Querdemontagemodul nach dem Lösen der Flanschverbindung des starren ersten Teils (130) des Kapselungsabschnittes lösbar, während die benachbarten Schaltanlagenabschnitte 320, 330 in der Schaltanlage verbleiben.

Anders dazu bleibt im in Fig. 4 gezeigten Fall der Nominalleiter 150 zusammen mit dem Querdemontagemodul 100 am benachbarten Schaltanlagenabschnitts 330 befestigt und wird zur Demontage endseitig nur von den Gegenkontakten des benachbarten Schaltanlagenabschnitts 320 gelöst, so dass dort ebenfalls eine Lücke zwischen dem Nominalleiter 150 und (nicht gezeigten) Gegenkontakt des benachbarten Schaltanlagenabschnitts 320 entsteht.

Anschließend ist der Querdemontagemodul 100 gleichzeitig und zusammen mit dem an ihm immer noch befestigten Schaltanlagenabschnitt 330 aus der Schaltanlage demontierbar. Falls der Schaltanlagenabschnitt 330 im Betrieb der Schaltanlage seinerseits mit weiteren Querdemontagemodulen oder Nachbarmodulen verbunden ist, so müssen vor der Demontage des Querdemontagemoduls und des Schaltanlagenabschnitts 330 diese Verbindungen ebenfalls noch gelöst werden.

Bei Bedarf kann das Gehäuse 110, 115 vor dem Lösen der Flanschverbindungen mit einer Hebe- oder Stützvorrichtung stabilisiert werden. Wie diskutiert, kann dabei durch die einstückige Ausführung der Teile 130, 160 zu einem gemeinsamen Gehäuseteil 115 das gesamte Modul an nur einem Aufhänge- bzw. Befestigungspunkt gehalten bzw. stabilisiert werden. Anschließend wird das Modul 100 aus seiner Position in der Schaltanlage 310, wie etwa in Fig. 4 gezeigt, entfernt. Typischerweise werden im Verlauf des oben skizzierten Verfahrens die Federelemente 240 demontiert.

Die Nominalleiter 150 definieren durch ihre Zylinderform Längsachsen. Wenn besonders kompakte Schaltanlagenmodule und Querdemontagemodule erzielt werden sollen, ist es vorteilhaft, wenn die Längsachsen aller Nominalleiter 150 in einer einzigen Ebene angeordnet sind. Um einen Einbau des Querdemontagemoduls in der in Fig. 5 gezeigten Lage, als auch in einer um 180 Grad bezüglich der Längsachse des mittleren Nominalleiters 150 gedrehten Position zu erlauben, ist es weiter vorteilhaft, wenn die Nominalleiter beziehungsweise deren Längsachsen in dieser genannten Ebene in regelmäßigem Abstand voneinander entfernt angeordnet sind. Besonders kompakte Schaltanlagenmodule und Querdemontagemodule sind erzielbar, wenn die stirnseitigen Anschlussflächen der Flansche 200, 290 rechtwinklig zu diesen Längsachsen angeordnet sind.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Querdemontagemodul (100) für eine Hochspannungsschaltanlage, umfassend ein Gehäuse (110), umfassend:
a) drei Kapselungsabschnitte (120) mit jeweils einem starren ersten Teil (130) und einem starren zweiten Teil (140), die in Nominalleiterrichtung relativ zueinander bewegbar miteinander verbunden sind, wobei jeder Kapselungsabschnitt (120) zur Aufnahme eines Nominalleiterelements ausgelegt ist,
b) drei längenveränderbare Nominalleiterelemente (150), wobei pro Phase jeweils ein Nominalleiterelement (150) in einem Kapselungsabschnitt (120) angeordnet ist,
wobei die drei Kapselungsabschnitte (120) über Verbindungselemente (160) miteinander zu einem gemeinsamen Gasraum (180) verbunden sind.

2. Modul nach Anspruch 1, wobei jeweils der erste Teil (130) und der zweite Teil (140) der Kapselungsabschnitte (120) teleskopartig verbunden sind.

3. Modul nach Anspruch 1 oder 2, wobei die Verbindungselemente (160) die ersten drei Teile (130) starr miteinander verbinden.

4. Modul nach Anspruch 3, wobei die Verbindungselemente (160) zusammen mit den ersten drei Teilen (130) einstückig als Gehäuseteil (115) ausgelegt sind.

5. Modul nach Anspruch 3 oder 4, wobei die Verbindungselemente (160) und/oder Versteifungsprofile mechanisch derart stabil mit den ersten drei Teilen (130) verbunden sind, dass der Querdemontagemodul (100) an einem der drei Teile (130) anhebbar ist.

6. Modul nach einem der vorhergehenden Ansprüche, wobei die Längsachsen der drei Kapselungsabschnitte (120) parallel sind und in einer gemeinsamen Ebene angeordnet sind.

7. Modul nach Anspruch 6, wobei die Längsachsen in gleichen Abständen voneinander entfernt angeordnet sind.

8. Modul nach einem der vorhergehenden Ansprüche, wobei das Gehäuse mindestens ein Element (300) aus der Gruppe umfasst, die besteht aus: einem Überdruckventil, einem Gashandlings-Ventil, einer Gasdruckerfassung, einer Temperaturerfassung, und einer Teilentladungserfassung.

9. Modul nach einem der vorhergehenden Ansprüche, wobei die Kapselungsabschnitte (120) endseitig jeweils einen Flansch (200) aufweisen, und wobei die Flansche (200) zur Montage von Schottisolatoren (220) oder Stützisolatoren ausgelegt sind.

10. Modul nach einem Ansprüche 1 bis 8, wobei die drei ersten Teile (130) endseitig über einen gemeinsamen Flansch (290) verbunden sind.

11. Modul nach einem der vorhergehenden Ansprüche, wobei jeweils der erste Teil (130) und zweite Teil (140) der Kapselungsabschnitte (120) mit einem elektrischen Leiter (250) verbunden sind.

12. Gasgekapselte Hochspannungsschaltanlage (310), umfassend ein Querdemontagemodul (100) gemäß einem der vorhergehenden Ansprüche, wobei der gemeinsame Gasraum (180) des Gehäuses (110) mit einem elektrisch isolierenden Gas gefüllt ist.

13. Schaltanlage nach Anspruch 11, wobei die Kapselungsabschnitte (120) des Gehäuses (100) über Flansche (200) stirnseitig mit benachbarten Modulen (320, 330) der Schaltanlage verbunden sind, wobei jeweils der erste Teil (130) und der zweite Teil (140) eines Kapselungsabschnitts (120) über ein Federelement gegeneinander verspannbar sind, um eine Längsausdehnung der benachbarten Module der Schaltanlage aufgrund thermischer Ausdehnung zumindest teilweise kompensieren zu können.

14. Verfahren zur Demontage eines Querdemontagemoduls aus einer Hochspannungsschaltanlage nach einem der Ansprüche 11 oder 12, umfassend:
a) Evakuieren eines Isoliergases aus dem gemeinsamen Gasraum (180) des Gehäuses (110),
b) Lösen von mindestens einer der endseitigen, mechanischen Verbindungen der jeweils drei Kapselungsabschnitte (120) sowie den drei Nominalleitern (150), wobei die drei Kapselungsabschnitte (120) über Verbindungselemente (160) miteinander zu einem gemeinsamen Gasraum (180) verbunden sind;
c)Zusammenschieben des jeweils ersten und zweiten Teils (130, 140) der drei Kapselungselemente (120), sowie der Nominalleiterelemente (150), so dass eine Lücke zu einem benachbarten Schaltanlagenabschnitt entsteht,
d) Entfernen des Querdemontagemoduls (100).

15. Verfahren nach Anspruch 14, **dadurch gekennzeichnet, dass** der Querdemontagemodul (100) zur Demontage einseitig an einem benachbarten Schaltanlagenabschnitt befestigt bleibt, so der Querdemontagemodul (100) zusammen mit diesem Schaltanlagenabschnitt entfernt wird.

## Claims

1. Transverse dismantling module (100) for a high-voltage switchgear assembly, comprising a housing (110), comprising:
a) three encapsulating sections (120), each having a rigid first part (130) and a rigid second part (140), which are connected to one another movably relative to one another in the nominal conductor direction, wherein each encapsulating section (120) is designed to receive a nominal conductor element,
b) three variable-length nominal conductor elements (150), wherein in each case one nominal conductor element (150) is arranged in an encapsulating section (120) per phase,
wherein the three encapsulating sections (120) are connected to one another via connecting elements (160) to form a common gas space (180).

2. Module according to Claim 1, wherein in each case the first part (130) and the second part (140) of the encapsulating sections (120) are connected telescopically.

3. Module according to Claim 1 or 2, wherein the connecting elements (160) connect the first three parts (130) rigidly to one another.

4. Module according to Claim 3, wherein the connecting elements (160) together with the first three parts (130) are configured integrally as housing part (115).

5. Module according to Claim 3 or 4, wherein the connecting elements (160) and/or reinforcing profiles are connected to the first three parts (130) mechanically and stably in such a way that the transverse dismantling module (100) can be raised on one of the three parts (130).

6. Module according to one of the preceding claims, wherein the longitudinal axes of the three encapsulating sections (120) are parallel to one another and are arranged in a common plane.

7. Module according to claim 6, wherein the longitudinal axes are arranged at a distance from one another with equal spacings.

8. Module according to one of the preceding claims, wherein the housing comprises at least one element (300) from the group consisting of: a pressure relief valve, a gas handling valve, a gas pressure sensing system, a temperature sensing system, and a partial discharge sensing system.

9. Module according to one of the preceding claims, wherein the encapsulating sections (120) have, at the ends, in each case one flange (200), and wherein the flanges (200) are designed for fitting barrier insulators (220) or post insulators.

10. Module according to one of Claims 1 to 8, wherein the three first parts (130) are connected at the ends via a common flange (290).

11. Module according to one of the preceding claims, wherein in each case the first part (130) and the second part (140) of the encapsulating sections (120) are connected to an electrical conductor (250).

12. Gas-encapsulated high-voltage switchgear assembly (310), comprising a transverse dismantling module (100) according to one of the preceding claims, wherein the common gas space (180) in the housing (110) is filled with an electrically insulating gas.

13. Switchgear assembly according to Claim 11, wherein the encapsulating sections (120) of the housing (100) are connected at the ends, via flanges (200), to adjacent modules (320, 330) of the switchgear assembly, wherein in each case the first part (130) and the second part (140) of an encapsulating section (120) can be tensioned with respect to one another via a spring element in order to be able to at least partially compensate for a longitudinal expansion of the adjacent modules of the switchgear assembly owing to thermal expansion.

14. Method for dismantling a transverse dismantling module from a high-voltage switchgear assembly according to either of Claims 11 and 12, comprising:
a) evacuating an insulating gas from the common gas space (180) of the housing (110),
b) detaching at least one of the end-side mechanical connections of the respective three encapsulating sections (120) and the three nominal conductors (150), wherein the three encapsulating sections (120) are connected to one another via connecting elements (160) to form a common gas space (180);
c) pushing together the respective first and second parts (130, 140) of the three encapsulating elements (120) and the nominal conductor elements (150) so that a gap with respect to an adjacent switchgear assembly section is produced,
d) removing the transverse dismantling module (100).

15. Method according to Claim 14, **characterized in that** the transverse dismantling module (100) for dismantling remains fastened at one end to an adjacent switchgear assembly section so that the transverse dismantling module (100) is removed together with this switchgear assembly section.

## Revendications

1. Module à démontage transversal (100) pour un équipement de commutation à haute tension, comprenant un boîtier (110), comprenant :
a) trois portions de blindage (120) ayant chacune une première partie rigide (130) et une deuxième partie rigide (140), lesquelles sont reliées entre elles de manière à pouvoir se déplacer l'une par rapport à l'autre dans la direction du conducteur nominal, chaque portion de blindage (120) étant conçue pour accueillir un élément conducteur nominal,
b) trois éléments conducteurs nominaux (150) de longueur variable, un élément conducteur nominal (150) étant respectivement disposé dans une portion de blindage (120) pour chaque phase,
les trois portions de blindage (120) étant reliées ensemble par le biais d'éléments de liaison (160) en un espace à gaz (180) commun.

2. Module selon la revendication 1, avec lequel la première partie (130) et la deuxième partie (140) des portions de blindage (120) sont reliées de manière télescopique.

3. Module selon la revendication 1 ou 2, avec lequel les éléments de liaison (160) relient les trois premières parties (130) de manière rigide entre elles.

4. Module selon la revendication 3, avec lequel les éléments de liaison (160), en association avec les trois premières parties (130), sont conçus d'un seul tenant en tant que partie de boîtier (115).

5. Module selon la revendication 3 ou 4, avec lequel les éléments de liaison (160) et/ou des profilés raidisseurs sont reliés mécaniquement à demeure avec les trois premières parties (130) de telle sorte que le module à démontage transversal (100) peut être soulevé au niveau de l'une des trois parties (130).

6. Module selon l'une des revendications précédentes, avec lequel les axes longitudinaux des trois portions de blindage (120) sont parallèles et sont disposés dans un plan commun.

7. Module selon la revendication 6, avec lequel les axes longitudinaux sont disposés de manière équidistante les uns des autres.

8. Module selon l'une des revendications précédentes, avec lequel le boîtier comprend au moins un élément (300) du groupe composé de : une soupape de surpression, une valve de gestion de gaz, un détecteur de pression de gaz, un détecteur de température et un détecteur de décharge partielle.

9. Module selon l'une des revendications précédentes, avec lequel les portions de blindage (120) possèdent respectivement une bride (200) du côté de l'extrémité et avec lequel les brides (200) sont conçues pour le montage d'isolateurs de cloisonnement (220) ou d'isolateurs à ferrure.

10. Module selon l'une des revendications 1 à 8, avec lequel les trois premières parties (130) sont reliées du côté de l'extrémité par le biais d'une bride (290) commune.

11. Module selon l'une des revendications précédentes, avec lequel les premières parties (130) et les deuxièmes parties (140) des portions de blindage (120) sont respectivement reliées à un conducteur électrique (250).

12. Équipement de commutation à haute tension (310) sous enveloppe gazeuse, comprenant un module à démontage transversal (100) selon l'une des revendications précédentes, l'espace à gaz (180) commun du boîtier (110) étant rempli d'un gaz électriquement isolant.

13. Équipement de commutation selon la revendication 11, avec lequel les portions de blindage (120) du boîtier (100) sont reliées par le biais de brides (200) du côté frontal à des modules voisins (320, 330) de l'équipement de commutation, la première partie (130) et la deuxième partie (140) d'une portion de blindage (120) pouvant respectivement être serrées l'une contre l'autre par le biais d'un élément à ressort afin de pouvoir compenser au moins partiellement une expansion longitudinale des modules voisins de l'équipement de commutation en raison de la dilatation thermique.

14. Procédé de démontage d'un module à démontage transversal hors d'un équipement de commutation à haute tension selon l'une des revendications 11 ou 12, comprenant :
a) expulsion d'un gaz isolant hors de l'espace à gaz (180) commun du boîtier (110),
b) détachement d'au moins l'une des liaisons mécaniques côté extrémité des trois portions de blindage (120) respectives ainsi que des trois conducteurs nominaux (150), les trois portions de blindage (120) étant reliées ensemble par le biais d'éléments de liaison (160) en un espace à gaz (180) commun,
c) emboîtement respectivement de la première et de la deuxième partie (130, 140) des trois portions de blindage (120) ainsi que des éléments conducteurs nominaux (150) de manière à produire un intervalle par rapport à une portion voisine de l'équipement de commutation,
d) enlèvement du module à démontage transversal (100).

15. Procédé selon la revendication 14, **caractérisé en ce que** le module à démontage transversal (100), pour le démontage, reste fixé d'un côté à une portion voisine de l'équipement de commutation, de sorte que le module à démontage transversal (100) est retiré conjointement avec cette portion de l'équipement de commutation.
